# EUROPÄISCHE PATENTSCHRIFT

(11) **EP 0 802 753 B1**
(45) Veröffentlichungstag und Bekanntmachung des Hinweises auf die Patenterteilung: **09.09.1998**
(21) Anmeldenummer: 95942202.3
(22) Anmeldetag: 27.12.1995
(51) Int. Cl.: A47J 27/18, G07F 9/10

(54) **VORRICHTUNG ZUR DISKONTINUIERLICHEN ZUBEREITUNG VON TEIGWAREN UND PORTIONIERVORRICHTUNG ZUR VERWENDUNG MIT EINER SOLCHEN VORRICHTUNG**
EQUIPMENT FOR THE DISCONTINUOUS PREPARATION OF PASTA, AND PORTIONING DEVICE FOR USE WITH IT
INSTALLATION SERVANT A LA PREPARATION DISCONTINUE DE PATES ALIMENTAIRES, ET DISPOSITIF DE DIVISION EN PORTIONS UTILISE AVEC UNE TELLE INSTALLATION

(30) Priorität: 14.01.1995 DE 19500973
(43) Veröffentlichungstag der Anmeldung: 29.10.1997
(73) Patentinhaber: Stein, Hans-Ulrich, Dr., 6949 Comano (CH)
(72) Erfinder: Stein, Hans-Ulrich, Dr., 6949 Comano (CH)
(74) Vertreter: Cohausz & Florack Patentanwälte
(86) Internationale Anmeldenummer: EP9505135
(87) Internationale Veröffentlichungsnummer: WO9621383

(56) Entgegenhaltungen:
- EP-A- 0 296 549
- WO-A-90/04345
- WO-A-92/14391
- DE-U- 9 317 939
- US-A- 3 928 045
- US-A- 4 979 435
- US-A- 5 010 806

## Beschreibung

Die Erfindung betrifft eine Vorrichtung zur diskontinuierlichen Zubereitung von Teigwaren, wie Spaghetti od. dgl., mit einer Portioniervorrichtung zur Aufnahme der Rohteigwaren, einer Kochkammer und einer Entwässerungskammer, wobei der Einlaß und Auslaß von Kochkammer und Entwässerungskammer jeweils durch als Schließklappen ausgebildete Ventile verschließbar sind, wobei zwischen Kochkammer und Entwässerungskammer eine einzige um eine Drehachse schwenkbare Schließklappe vorgesehen ist, und wobei die Schließklappen im Einlaßbereich der Kochkammer und Auslaßbereich der Entwässerungskammer quer zur Einlaß- bzw. Auslaßrichtung verfahrbar sind.

Vorrichtungen zum diskontinuierlichen Zubereiten von portionierten Teigwaren sind in vielerlei Ausführungen bekannt. Sie dienen dazu, eine portinonierte Menge roher Teigwaren in möglichst kurzer Zeit zuzubereiten und finden daher in entsprechenden Automaten Anwendung. Eine solche bekannte Vorrichtung ist in der WO 90/04345 beschrieben. Dort werden oberhalb einer Kochkammer befindliche Rohteigwaren portioniert in die Kochkammer gegeben, die Kochkammer wird verschlossen und die Teigwaren werden unter vorbestimmter Temperatur und entsprechendem Druck in relativ kurzer Zeitspanne gekocht. Anschließend verlassen die gekochten Teigwaren mit dem Kochwasser die Kochkammer und werden in einer sich anschließenden Entwässerungskammer vom Wasser befreit. Schließlich erfolgt die Ausgabe in ein geeignetes Behältnis wie beispielsweise einen Teller.

Die Kochkammer wird in ihrem Einlaß- und Auslaßbereich von jeweils einem Kugelventil verschlossen, welches einerseits ein Befüllen und Entleeren der Kochkammer gewährleistet und andererseits - während des Kochvorganges - eine sichere Abdichtung der Kochkammer garantiert. Aufgrund der relativ hohen Reibung von Kugelventilen sind diese jedoch äußerst schwergängig und ihr Antrieb bedarf daher einer gewissen Kraft, so daß in der Regel pneumatische Antriebe zum Einsatz kommen. Kugelventile haben jedoch den weiteren Nachteil, daß sie eine relativ große Bauhöhe besitzen und daher die Gesamthöhe der eingangs genannten Vorrichtung vergrößern. Schließlich ist die Verwendung eines Kugelventils im Auslaßbereich der Kochkammer nicht optimal, da die - gekochten und damit empfindlichen - Teigwaren beim Passieren des Kugelventils beschädigt werden können.

Darüber hinaus ist aus den eingetragenen Unterlagen des deutschen Gebrauchsmuster G 93 17 939.1 eine Vorrichtung zum diskontinuierlichen Zubereiten portionierter Teigwaren mit den Merkmalen gemäß dem Oberbegriff von Patentanspruch 1 bekannt. Bei dieser bekannten Vorrichtung werden die Schließklappen zum Verschließen am Ende ihrer Linearbewegung mittels eines Hebelgetriebes senkrecht auf die Öffnungsebene der jeweiligen Kammer gepreßt. Das Verschließen der entsprechenden Kammern senkrecht zur Öffnungsebene ist für sich bereits seit langem bekannt, hierzu wird beispielsweise auf die Vorveröffentlichungen PCT/IT 86/00063 oder PCT/EP 89/00797 verwiesen.

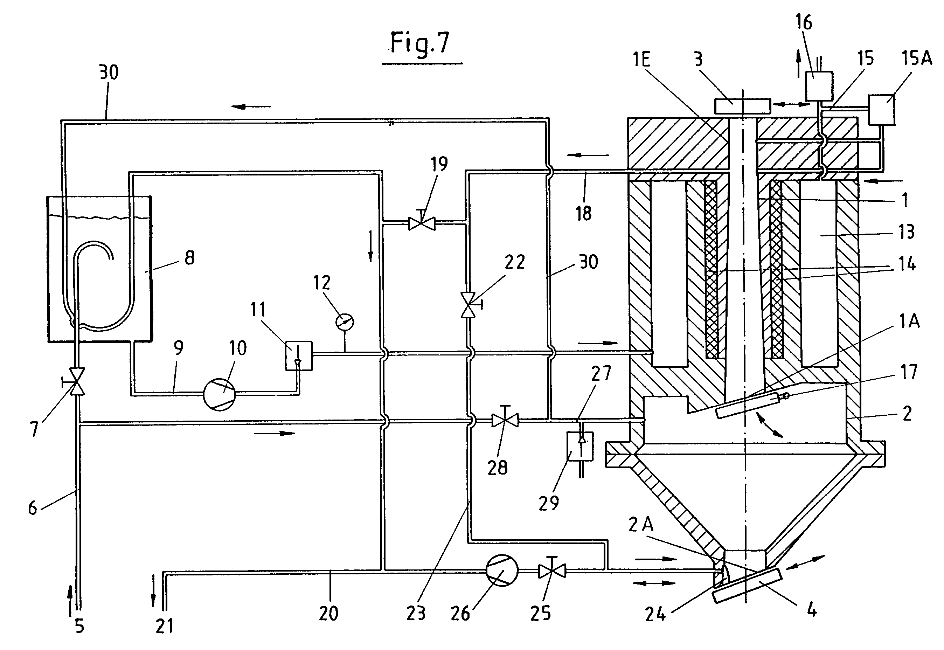

Die Funktionsweise der aus den eingetragenen Unterlagen des deutschen Gebrauchsmusters G 93 17 939.1 bekannten Vorrichtung soll anhand Fig. 7 näher erläutert werden. Die Vorrichtung besteht im wesentlichen aus einer Kochkammer 1 mit einem Kochkammereinlaß 1E und einem Kochkammerauslaß 1A. Oberhalb der Kochkammer 1 ist eine (nicht dargestellte) Portioniervorrichtung zum Beschicken der Kochkammer 1 vorgesehen. Unterhalb der Kochkammer 1 befindet sich eine Entwässerungskammer 2, deren Einlaß mit dem Kochkammerauslaß 1A identisch ist. Am Boden der Entwässerungskammer 2 befindet sich ein Entwässerungskammerauslaß 2A. Die Kochkammer 1 ist in ihrem Einlaßbereich 1E durch eine linear verfahrbare Schließklappe 3 und der Auslaßbereich 2A der Entwässerungskammer 2 durch eine linear verfahrbare Schließklappe 4 verschließbar.

Der eigentliche Zubereitungsvorgang gestaltet sich wie folgt: Nachdem die portionierte Menge von Teigwaren in die in ihrem Auslaßbereich 1A verschlossene Kochkammer 1 eingefüllt worden ist, wird die in ihrem unteren Bereich bereits verschlossene Kochkammer 1 mit Hilfe der linear verfahrbaren Schließklappe 3 verschlossen. Von einer Frischwasserzufuhr 5 wird über eine Leitung 6 und ein geöffnetes Absperrventil 7 Frischwasser in einen Vorratsbehälter 8 eingelassen. Von dort gelangt das Wasser über eine Leitung 9 mittels einer Pumpe 10 durch ein Rückschlagventil 11 mit einem über ein Manometer 12 ablesbaren vorgegebenen Druck in die Heizkammer 13, welche die Kochkammer 1 ringspaltartig umgibt. In der Zwischenwandung zwischen Kochkammer 1 und Heizkammer 13 sind Heizstäbe 14 angeordnet. Bevor der eigentliche Heizvorgang beginnt, wird die gesamte Heizkammer 13 mit Wasser gefüllt und darüber hinaus eine vorgegebene Menge Wasser über eine Fülleitung 15, welche mit einem Überdruckventil 16 ausgestattet ist in die Kochkammer 1 eingefüllt. Nachdem nun der gewünschte Füllstand innerhalb der Kochkammer 1 erreicht ist, wird ein Absperrventil 15A in der Fülleitung 15 verschlossen, so daß die Kochkammer 1 hermetisch verschlossen ist. In ihrem Auslaßbereich 1A dient dazu eine um eine Achse schwenkbare Schließklappe 17.

Der nach dem eigentlichen Kochvorgang in der Kochkammer 1 herrschende Überdruck wird mittels einer Druckentlastungsleitung 18, die einerseits über ein Absperrventil 19 mit einer Abwasserleitung 20, welche in einer Abwasserabfuhr 21 endet, und andererseits über ein Absperrventil 22 und eine Leitung 23 mit der Entwässerungskammer 2 verbunden ist, durch Öffnen des Absperrventils 22 abgebaut. Nunmehr befinden sich Kochkammer 1 und Entwässerungskammer 2 auf etwa gleichem Druckniveau. Nach dem Schließen des Absperrventils 22 kann die Schließklappe 17 geöffnet werden und die gekochten Teigwaren fallen mit dem restlichen Kochwasser in die Entwässerungskammer 2.

Ein im Bodenbereich der Entwässerungskammer 2 vorgesehenes Sieb 24 bildet den Durchlaß zur Leitung 23. Nach Schließen des Absperrventils 22 und Öffnen des Absperrventils 25 sorgt eine Abwasserpumpe 26 für die Entwässerung der in der Entwässerungskammer 2 vorhandenen Teigwaren. Dabei sorgt das Sieb 24 dafür, daß die Teigwaren die Entwässerungskammer 2 nicht verlassen. Gleichzeitig wird der in der Entwässerungskammer noch vorhandene Überdruck abgebaut. Dazu dient eine Leitung 27, welche mittels eines Absperrventils 28 mit der Frischwasserleitung 6 verbunden ist und in der Nähe ihrer Einmündung in die Entwässerungskammer 2 ein Belüftungsventil 29 aufweist. Aus der Entwässerungskammer 2 gelangt heißer Dampf durch eine Vorwärmleitung 30 in den Vorratsbehälter 8 und wärmt dort das später durch die Heizstäbe 14 aufzuheizende Frischwasser zusätzlich auf. Die Vorwärmleitung 30 endet in der Wasserleitung 20 und somit in der Abwasserabfuhr 21.

Nachdem die Teigwaren vom Kochwasser getrennt worden sind, läßt sich die fertig zubereitete Portion Teigwaren mittels der linear verschiebbaren Schließklappe 4 auf einen unterhalb der Entwässerungskammer 2 befindlichen Teller oder dergleichen ausgeben.

Der Querschnitt der Kochkammer 1 läuft nach unten konisch auseinander. Auf diese Weise wird in diesem Bereich ein Hängenbleiben gekochter Teigwaren verhindert. Zur Reinigung der Entwässerungskammer 2 wird nach der Ausgabe der Teigwaren und erneutem Verschluß der Schließklappe 4 Frischwasser über die Leitung 6 durch Öffnen des Absperrventils 28 in die Entwässerungskammer 2 geleitet. Nach dem Füllen der Entwässerungskammer 2 und Verschließen des Absperrventils 28 wird das Absperrventil 25 geöffnet und die Pumpe 26 aktiviert, so daß das Abwasser durch das Sieb 24 über die Abwasserleitung 20 zur Abwasserabfuhr 21 gelangt, bis die Entwässerungskammer 2 vollständig entleert ist.

Nachteilig an der bekannten Vorrichtung ist, daß die Führung der linear verschiebbaren Schließklappen 3 und 4 so ausgestaltet sein muß, daß die Verschieberichtung quer zur Einlaß- bzw. Auslaßrichtung der Kochkammer bzw. Entwässerungskammer um 90° geändert werden muß, um die senkrechte Verschließrichtung zu erreichen. Dies ist hinsichtlich der Führung äußerst aufwendig und erfordert darüber hinaus einen sehr großen Andruck der Schließklappe, um die Dichtigkeit der entsprechenden Kammer bei den auftretenden hohen Drücken zu gewährleisten. Um dies zu erreichen ist neben dem linearen Antrieb noch das Aufbringen einer senkrecht dazu wirkenden Verschlußkraft notwendig.

Aus der US-A-3 928 045 ist eine Vorrichtung zur diskontinuierlichen Zubereitung von Nudeln bekannt, wobei bereits fertig gekochte Nudeln in einem gekühlten spiralförmigen Speicher in einzelnen Behältern vorgesehen sind, die dann auf Anforderung einer Bedienperson einer Erwärmeinrichtung zugeführt werden, die die bereits gekochten aber gekühlten Nudeln erhitzt. Bei dieser bekannten Vorrichtung treten die weiter oben beschriebenen Probleme beim Kochen und Entwässern nicht auf.

Der Erfindung liegt daher die Aufgabe zugrunde, die eingangs genannte und zuvor näher beschriebene Vorrichtung zur diskontinuierlichen Zubereitung von Teigwaren so auszugestalten und weiterzubilden, daß der konstruktive Aufwand der gesamten Vorrichtung uns insbesondere der Schließklappenventile verringert wird, ohne daß es zu Undichtigkeiten oder Beeinträchtigungen im Betrieb kommt.

Diese Aufgabe ist dadurch gelöst, daß die linear bewegbaren Schließklappen in seitlichen Führungsschienen geführt werden, die jeweils eine Ausnehmung aufweisen, deren Enden je eine flache Abwinkelung aufweisen und daß zum Verschließen der Kammern die Schließklappen im Einlaßbereich der Kochkammer und Auslaßbereich der Entwässerungskammer in einem von den beiden Richtungen der Ausnehmung gebildeten flachen Winkel (α) auf die entsprechenden Öffnungen der jeweiligen Kammern gepreßt werden. Durch diese Konstruktionsart ist zuverlässig gewährleistet, daß die erfindungsgemäße Vorrichtung klein baut. Dies ist insbesondere für den Automatenbetrieb von entscheidender Wichtigkeit. Darüber hinaus sind für die Schließklappenverschlüsse nur wenige Konstruktionselemente notwendig.

Die Erfindung beruht also auf der überraschenden Erkenntnis, daß ein Verschluß der Schließklappen senkrecht zur Öffnungsebene der entsprechenden Kammer gar nicht notwendig ist, da auch eine schräg auf die Öffnungsebene bewegte Schließklappe die erwünschte Dichtigkeit gewährleisten kann, ohne evtl. vorhandene Dichtungselemente zu beschädigen oder zu zerstören.

Des weiteren ist den eingetragenen Unterlagen des deutschen Gebrauchsmusters G 93 17 939.1 eine Portioniervorrichtung für die Vorrichtung zum diskontinuierlichen Zubereiten von Teigwaren zu entnehmen, bei der aus einem Teigwarenvorratsbehälter zunächst eine vorbestimmte Menge an Teigwaren portioniert werden muß und im Anschluß daran der Kochkammer zugeführt wird. Zum Zwecke der Zuführung werden die waagerecht liegenden Spaghetti um 90° verschwenkt, um der Kochkammer zugeführt zu werden. Es ist schnell ersichtlich, daß einerseits beim Portionieren und andererseits beim Verschwenken einzelne Nudeln beschädigt oder zerstört werden können, so daß es zu weiteren Problemen beim Kochvorgang kommen kann. Darüber hinaus ist der Aufwand für das Portionieren und Zuführen der Teigwaren bei der bekannten Vorrichtung hinsichtlich seiner Konstruktion sehr hoch.

Weiterhin ist es erwünscht, daß bei der erfindungsgemäßen Vorrichtung eine zuverlässige Portioniervorrichtung zur Verfügung gestellt wird, die bei geringem konstruktiven Aufwand ein sicheres Zuführen der Rohrteigwaren in die Kochkammer gewährleistet, ohne daß es zu einer Beschädigung oder Zerstörung einzelner Nudeln kommen kann.

Dies wird dadurch erreicht, daß die Portioniervorrichtung eine Mehrzahl hintereinander angeordneter senkrechter Kammern aufweist, die über die Einlaßöffnung der Kochkammer bewegbar sind. Dadurch entfällt ein maschinelles Portionieren und ein "Dosieren" der Portionen kann über die Kammergröße oder die Füllmenge erfolgen. Da bei der Portioniervorrichtung kein Verschwenken der portionierten Menge an Rohteigwaren mehr erfolgt, ist eine unmittelbare Beschickung der Kochkammer ohne Richtungsumkehr der Teigwaren möglich.

In weiterer Ausgestaltung der Erfindung liegt der flache Winkel zum Schließen der Schließklappen im Bereich zwischen 0° und 55°, vorzugsweise zwischen 20° und 40°. Durch den verwendeten flachen Winkel wird sichergestellt, daß eine relativ große lineare Bewegung der Schließklappe in eine entsprechend hohe Anpreßkraft umgesetzt wird. Auf diese Weise ergibt sich, auch bei relativ geringer Antriebsleistung, ein zuverlässiger Verschluß der Kammer, welcher ausreicht, die beim Kochvorgang auftretenden hohen Drücke zu beherrschen.

In bevorzugter Ausgestaltung der Erfindung besteht die Oberfläche der Schließklappen und/oder der Öffnungsbereiche der Kammern und/oder der Führungsschienen aus gehärtetem Material. Auf diese Weise kann der Verschleiß dieser mechanisch besonders stark beanspruchten Bereiche minimiert werden, um die Standzeit der Vorrichtung zu erhöhen und den Aufwand an Wartung und Austausch gering zu halten.

In weiterer Ausgestaltung der Erfindung sind die mit den Teigwaren in Kontakt tretenden Teile der Vorrichtung oberflächenvergütet und/oder oberflächenbeschichtet. So können Bauteile aus Aluminium eloxiert sein. Beispielsweise durch eine Teflon-Beschichtung kann zuverlässig erreicht werden, daß nach dem Ausgeben der fertig zubereiteten Teigwaren keine Teigwarenreste mehr im Inneren der Vorrichtung verbleiben.

Eine weitere Lehre der Erfindung sieht vor, daß die Ansteuerung der zwischen Kochkammer und Entwässerungskammer angeordneten Schließklappe außerhalb der Entwässerungskammer erfolgt und daß diese Schließklappe über wenigstens eine Verlängerung der Drehachse durch das Gehäuse der Entwässerungskammer angesteuert wird. Auf diese Weise wird, anders als bei der Vorrichtung gemäß den eingetragenen Unterlagen des deutschen Gebrauchsmusters G 93 17 939.1, der gesamte Verstellmechanismus der im Inneren der Entwässerungskammer angeordneten Schließklappe aus der Entwässerungskammer entfernt, so daß auch in diesem Bereich keine Teigwarenreste mehr an den Ansteuerungsorganen der Schließklappe hängenbleiben können.

Bevorzugt wird die Drehachse der Schließklappe zu ihrer Ansteuerung wenigstens auf einer Seite der Schließklappe verlängert und durch eine entsprechende Bohrung im Gehäuse der Entwässerungskammer über ein dort außerhalb des Gehäuses angeordnetes Getriebe angesteuert. Dabei erfolgt in weiterer Ausgestaltung der Erfindung die Ansteuerung über einen Hebel, dessen Ende mit einem linearen Antrieb derart verbunden ist, daß der Antrieb kurz vor dem Schließen einen großen Weg zurücklegt und die Schließklappe dabei nur eine sehr kleine Schwenkbewegung macht. Es ist jedoch auch möglich, wenngleich technisch aufwendiger, die Drehachse beidseitig durch das Gehäuse der Entwässerungskammer herauszuführen und mit zwei unterschiedlichen Hebeln anzusteuern.

Zur besseren Abdichtung können die Schließklappen und/oder die Öffnungsbereiche der Kammern mit Dichtungselementen versehen sein, welche in bevorzugter Weiterbildung der Erfindung so ausgebildet sind, daß jeder Öffnungsbereich der Kammern von einem entsprechend der Öffnungskontur verlaufenden Dichtungselement umgeben ist. Besonders zweckmäßig ist es, wenn die Öffnungen einen runden Querschnitt aufweisen und daß als Dichtungselemente O-Ringe vorgesehen sind. Mit dieser Ausgestaltung der Erfindung läßt sich die erwünschte Dichtigkeit erreichen, wobei zu Wartungszwecken die verwendeten O-Ringe ohne großen Aufwand ausgetauscht werden können.

Die erfindungsgemäße Vorrichtung zeichnet sich hinsichtlich ihrer Portioniervorrichtung dadurch aus, daß jede vertikal angeordnete Kammer zur Aufnahme einer bestimmten vorgebbaren Menge an Teigwaren vorgesehen ist. Dabei kann als Portioniervorrichtung ein schrittweise antreibbares Trommelmagazin vorgesehen sein, in dem die Kammern kreisförmig hintereinander angeordnet sind.

In weiterer Ausgestaltung der Erfindung bestehen die vertikal angeordneten Kammern aus Hohlzylindern. Diese Hohlzylinder bestehen zweckmäßigerweise aus einem durchsichtigen Material wie beispielsweise Glas oder Kunststoff, um einerseits den hygienischen Anforderungen zu genügen und andererseits den aktuellen Füllstand der gesamten Vorrichtung, d.h. die Anzahl der noch vollen Kammern anzuzeigen.

Es ist jedoch erfindungsgemäß auch denkbar, daß die Kammern in einem von zwei konzentrisch angeordneten Hohlzylindern gebildeten Ringspaltraum angeordnet sind, wobei zur Abtrennung der einzelnen Kammern eine der Anzahl der Kammern entsprechende Anzahl von zwischen den Hohlzylindern angeordneten vertikalen Stegen vorhanden sind. Diese Ausführung eines Trommelmagazins ist besonders preisgünstig herzustellen und erlaubt darüber hinaus, durch unterschiedlich beabstandete Stege auch unterschiedlich große Kammern zu schaffen, um der Vorrichtung unterschiedlich große Mengen an Teigwaren zur Verfügung stellen zu können. So lassen sich beispielsweise kleine und große Portionen von Rohteigwaren im Trommelmagazin aufbewahren, um, je nach Wunsch der Bedienperson, eine entsprechende Menge von Teigwaren zuzubereiten.

Erfindungsgemäß sind schließlich die vertikal angeordneten Kammern unten offen und in engem Abstand zu einer Gleitfläche bewegbar. Auf diese Weise ist zuverlässig gewährleistet, daß bei der Drehbewegung der vertikalen Kammern ein zuverlässiger "Verschluß" des Kammerbodens gegeben ist, ohne daß hierfür weitere Mechanismen nötig sind. Besonders zweckmäßig ist es, daß die vertikalen Kammern auch oben offen sind und mit einem einzigen, gemeinsamen Deckel verschließbar sind. So ist das Nachfüllen der erfindungsgemäßen Portioniervorrichtung sehr einfach durchführbar, da nur ein einziger Deckel abgenommen werden muß, um eine Vielzahl von Kammern mit den Rohteigwaren füllen zu können.

Die Erfindung wird nachfolgend anhand einer lediglich ein bevorzugtes Ausführungsbeispiel darstellenden Zeichnung näher erläutert. In der Zeichnung zeigen
- Fig. 1: ein Verschließventil der erfindungsgemäßen Vorrichtung in Draufsicht,
- Fig. 2: die Kochkammer und einen Teil der Entwässerungskammer der erfindungsgemäßen Vorrichtung im Vertikalschnitt,
- Fig. 3: die Kochkammer der erfindungsgemäßen Vorrichtung im Querschnitt entlang der Linie III-III aus Fig. 2,
- Fig. 4: die zwischen Kochkammer und Entwässerungskammer angeordnete Schließklappe in einem ersten Ausführungsbeispiel,
- Fig. 5: ein zweites Ausführungsbeispiel der Schließklappe gemäß Fig. 4,
- Fig. 6: ein weiteres Ausführungsbeispiel der Schließklappe gemäß Fig. 4 und
- Fig. 7: die Funktionsweise einer bekannten Vorrichtung zum diskontinuierlichen Zubereiten von portionierten Teigwaren in schematischer Darstellung,
- Fig. 8: die Portioniervorrichtung in schematischer Darstellung in Draufsicht und
- Fig. 9: die Portioniervorrichtung in schematischer Darstellung im Querschnitt.

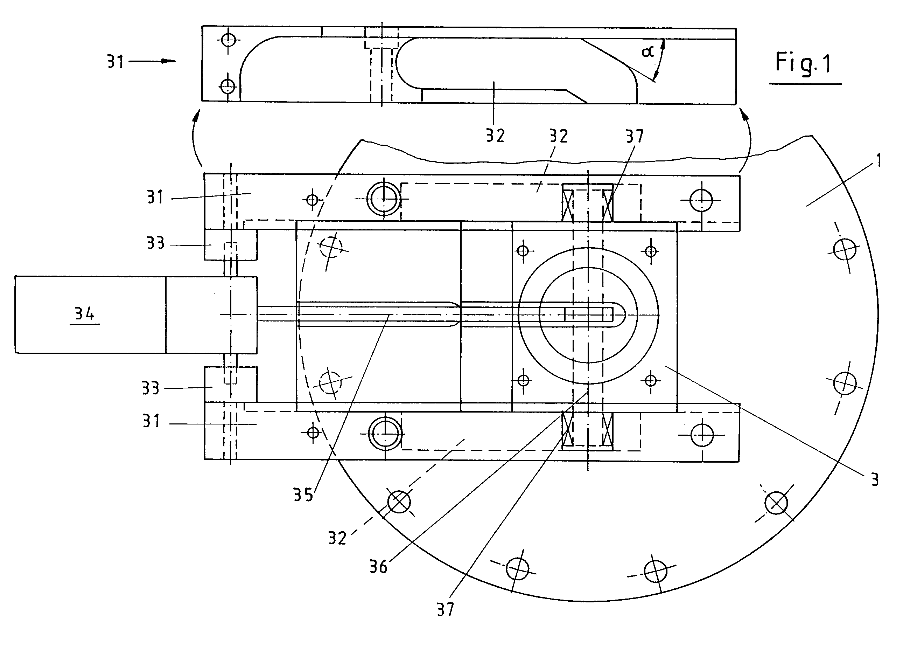

Da im dargestellten und insoweit bevorzugten Ausführungsbeispiel die Schließklappen 3 und 4 nahezu identisch aufgebaut sind, soll anhand der Fig. 1 die Funktionsweise lediglich am Beispiel der Schließklappe 3 erläutert werden. Dabei ist die Kochkammer 1 nur schematisch und teilweise aufgebrochen dargestellt. Die Führung der linear bewegbaren Schließklappe 3 erfolgt mittels Führungsschienen 31, in denen Ausnehmungen 32 vorhanden sind, deren Enden je eine flache Abwinkelung aufweisen, damit erfindungsgemäß zum Verschließen der Kochkammer 1 die Schließklappe 3 im Einlaßbereich 1E der Kochkammer 1 in einem flachen Winkel α auf die entsprechende Öffnung der Kochkammer 1 gepreßt werden kann.

Um die FunktionsweiSe der Führungsschienen 31 besser darstellen zu können, wurde im oberen Bereich von Fig. 1 die Führungsschiene 31 mit der Ausnehmung 32 und dem flachen Winkel α in Seitenansicht nochmals dargestellt.

Erfindungsgemäß liegt der Winkel α zum Verschließen der Kammern 1, 2 im Bereich zwischen 0 und 55°, bevorzugt im Bereich zwischen 20 und 40°. Im dargestellten Ausführungsbeispiel beträgt der Winkel α etwa 30°.

Aus Fig. 1 wird ferner schnell ersichtlich, daß der Verschluß der Kochkammer 1 mit einer geringen Anzahl von Bauteilen möglich ist. Hierzu zählen zwei Führungsschienen 31, an deren Ende jeweils ein Lagerbock 33 zur Lagerung eines Motors 34, welcher bevorzugt als Linearantrieb ausgebildet ist, befestigt sind. Der Motor 34 bewegt die Schließklappe 3 mittels einer Spindel oder Stange 35, deren Ende mit Hilfe einer Achse 36 an der Schließklappe 3 befestigt ist. Die Achse 36 dient darüber hinaus zur seitlichen Führung der Schließklappe 3 in den Führungsschienen 31. Zu diesem Zweck sind an den Enden der Achse 36 Nadellager 37 angeordnet, deren Größe der Schlitzbreite der Ausnehmung 32 entspricht. Bedingt durch die flache Abwinkelung der Ausnehmung 32 wird die Schließklappe 3 am Ende der Schließbewegung unter einem flachen Winkel α auf die Öffnung der Kochkammer 1 gepreßt, ohne daß eine Richtungsumkehr notwendig wird. Auf eine Überlagerung von Antrieben wird daher erfindungsgemäß verzichtet. Es versteht sich, daß die Anpreßkraft beim Verschließen umso größer wird, je flacher der Winkel α ausgebildet ist.

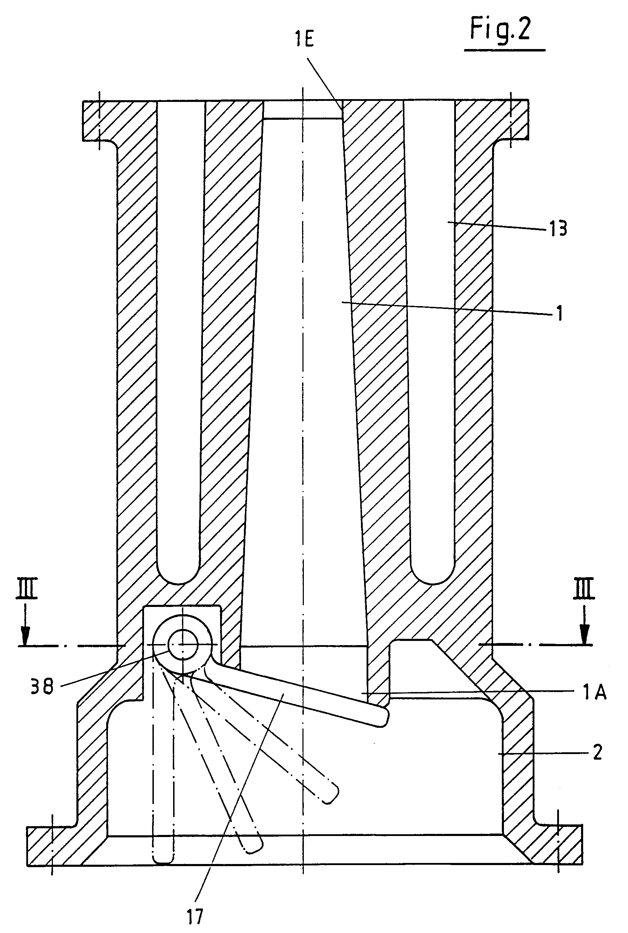

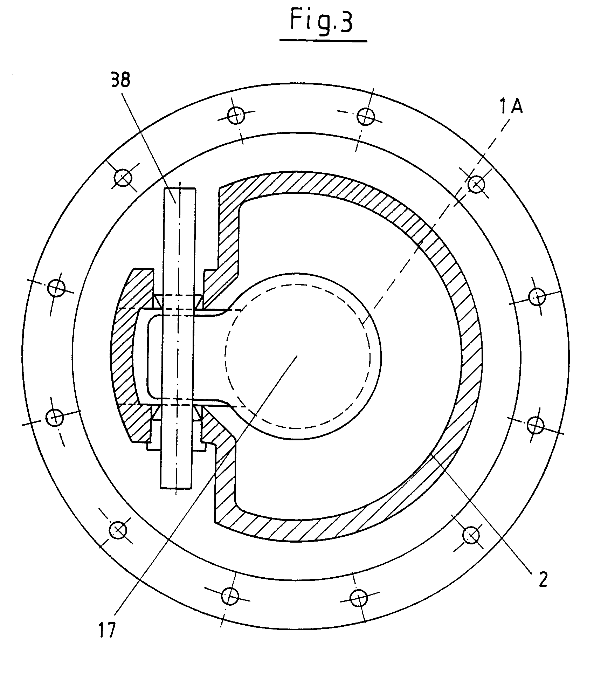

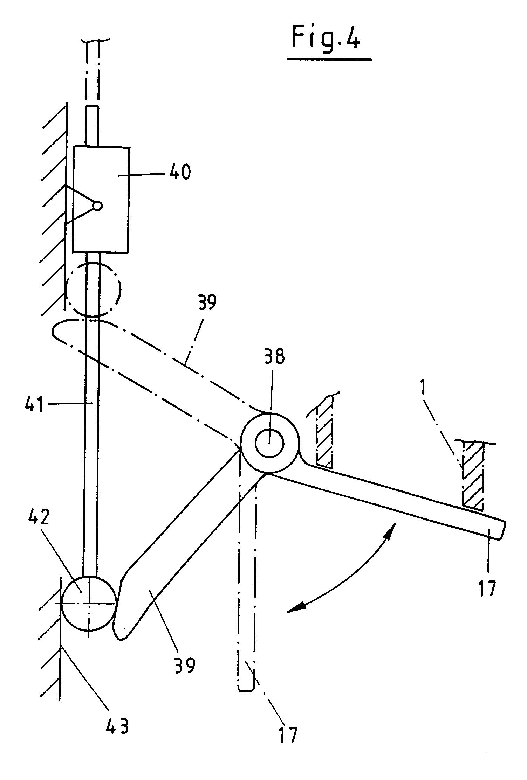

In den Fig. 2 bis 6 ist dargestellt, daß die Ansteuerung der zwischen Kochkammer 1 und Entwässerungskammer 2 angeordneten Schließklappe 17 außerhalb der Entwässerungskammer 2 erfolgt und daß diese Schließklappe 17 über wenigstens eine Verlängerung der Drehachse 38 durch das Gehäuse der Entwässerungskammer 2 angesteuert wird. Dabei ist in Fig. 2, in schematischer Darstellung, in einem Vertikalschnitt die Anordnung der Schließklappe 17 dargestellt. Aus Fig. 3 geht die Ansteuerung der Schließklappe 17 mittels der Drehachse 38 noch deutlicher hervor. Erfindungsgemäß wird nun die Drehachse 38 der Schließklappe 17 über einen Hebel angesteuert, dessen Ende mit einem linearen Antrieb derart verbunden ist, daß der Antrieb kurz vor dem Schließen einen großen Weg zurücklegt und die Schließklappe dabei nur eine sehr kleine Schwenkbewegung macht. Durch diese Übersetzung kann die erforderliche Kraft zum Verschließen problemlos aufgebracht werden. Dabei spielt der Winkel zwischen der Ebene der Schließklappe 17 und der Ebene des Hebels keine Rolle, wie aus den Fig. 4 bis 6 hervorgeht.

In Fig. 4 ist zum Antrieb des Hebels 39 ein Motor 40 mit einer Spindel 41 vorgesehen, welche an ihrem Ende ein Druckelement 42 aufweist. Zum Verschließen der Schließklappe 17 wird die Spindel 41 ausgefahren, bis das Druckelement 42 den Hebel 39 in der Schließposition der Schließklappe 17 mit Druck beaufschlagt. Im dargestellten und insoweit bevorzugten Ausführungsbeispiel ist der Hebel 39 dabei an seinem Ende so geformt, daß das Druckelement 42 in einem flachen Winkel zwischen dem schrägen Ende des Hebels 39 und einem Anschlag 43 einen großen Weg zurücklegen kann, um die erforderliche Schließkraft auf die Schließklappe 17 aufzubringen. In Fig. 4 ist strichpunktiert die Stellung bei geöffneter Schließklappe 17 und entsprechend hochgeschwenktem Hebel 39 dargestellt. Zum Öffnen der Kochkammer 1 kann sich die Schließklappe 17 durch Druck oder Schwerkraft oder durch eine geeignete andere mechanische Lösung, wie beispielsweise eine Feder, öffnen.

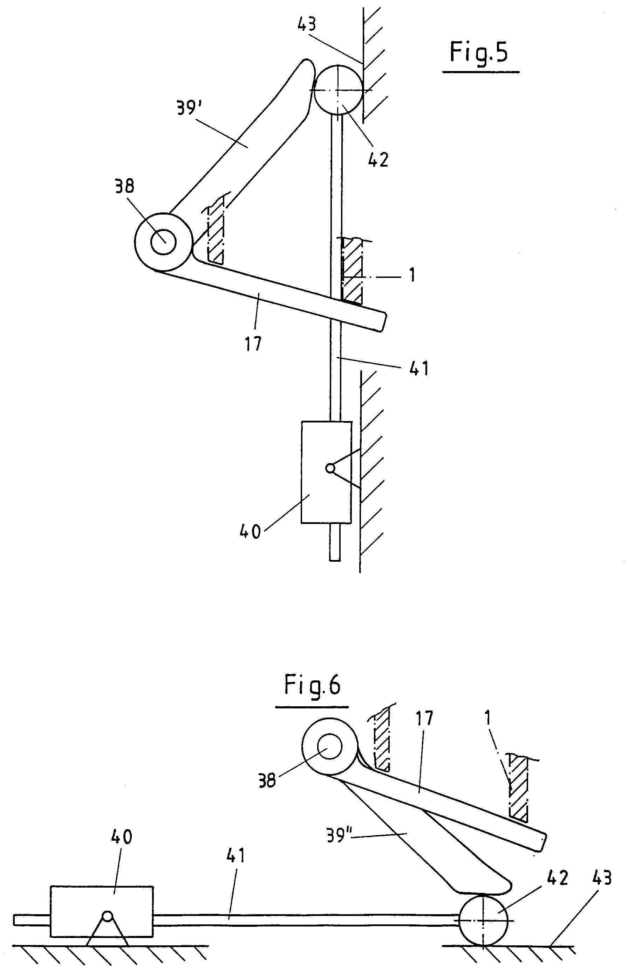

Die Fig. 5 und 6 entsprechen im wesentlichen der Konstruktion gemäß Fig. 4, nur sind die Ebenen der dort gezeigten Hebel 39' und 39'' und auch die Richtung des Linearantriebes verändert worden. Aus diesen Beispielen geht schnell hervor, daß der Winkel zwischen Schließklappe 17 und Hebel 39, 39', 39'' beliebig gewählt werden kann, insbesondere kann der Hebel zum Verschließen der Schließklappe auch in der Ebene der Schließklappe selbst angeordnet sein.

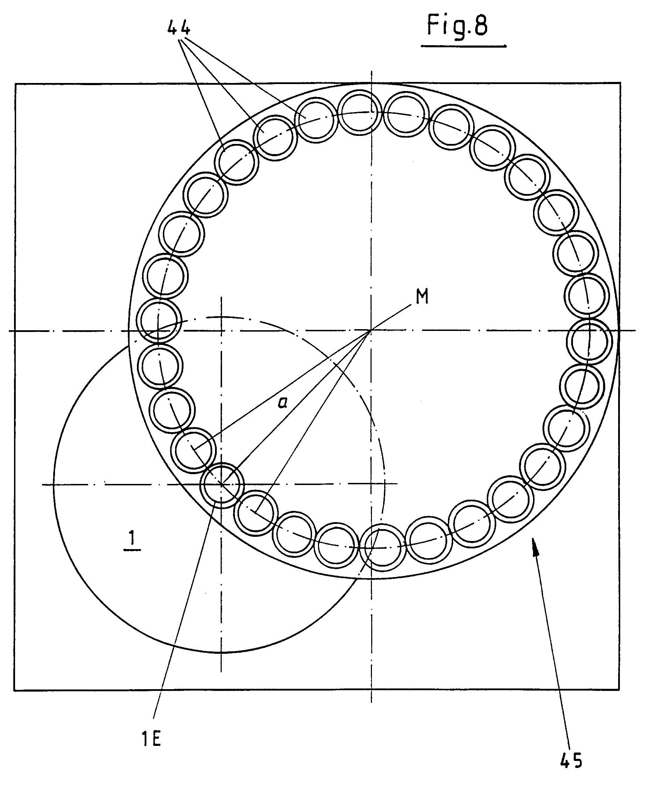

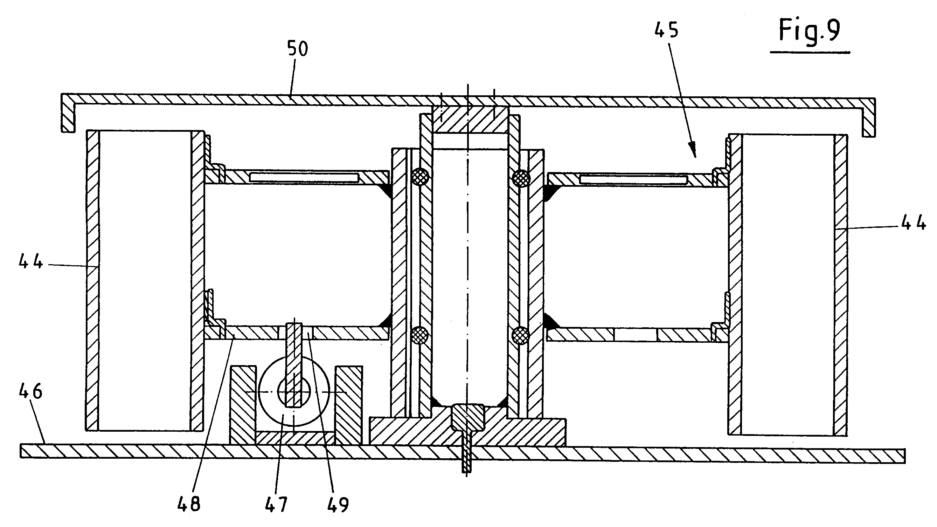

In den Fig. 8 und 9 ist schließlich schematisch die Portioniervorrichtung der erfindungsgemäßen Vorrichtung dargestellt. Aus der Draufsicht gemäß Fig. 8 geht hervor, daß die Portioniervorrichtung eine Mehrzahl hintereinander angeordneter senkrechter Kammern 44 aufweist, die über die Einlaßöffnung 1E der nur schematisch dargestellten Kochkammer 1 bewegbar sind. Dabei ist jede Kammer 44 zur Aufnahme einer portionierten Menge an Teigwaren vorgesehen. Besonders deutlich ist aus Fig. 8 zu entnehmen, daß als Portioniervorrichtung ein schrittweise antreibbares Trommelmagazin 45 vorgesehen ist, in dem die Kammern 44 mit gleichem Abstand a vom Mittelpunkt M kreisförmig hintereinander angeordnet sind. Im dargestellten und insoweit bevorzugten Ausführungsbeispiel bestehen die Kammern 44 aus Hohlzylindern, es ist jedoch auch denkbar, daß die Kammern in einem von zwei konzentrischen Hohlzylindern gebildeten Ringspaltraum angeordnet sind, wobei zur Abtrennung der einzelnen Kammern eine der Anzahl der Kammern entsprechende Anzahl von zwischen den Hohlzylindern angeordneten vertikalen Stegen vorhanden sind.

Die Funktion des Trommelmagazins 45 ist schematisch in Fig. 9 dargestellt. Zunächst ist erkennbar, daß die Kammern 44 unten offen sind und in engem Abstand zu einer Gleitfläche 46 bewegbar sind. In Fig. 9 ist der Abstand zwischen Kammer 44 und Gleitfläche 46 überhöht dargestellt. Der Antrieb des Trommelmagazins 45 erfolgt dabei zweckmäßigerweise über einen Stellmotor 47, welcher eine Mitnehmerplatte 48 mit entsprechend der Anzahl der Kammern 44 vorhandenen Ausnehmungen 49 schrittweise antreibt.

Schließlich sind bei der Portioniervorrichtung die einzelnen vertikalen Kammern 44 auch oben offen und mit einem einzigen, gemeinsamen Deckel 50 verschließbar. Auf diese Weise gestaltet sich das Nachfüllen der Portioniervorrichtung sehr bedienungsfreundlich, da zum Nachfüllen lediglich der aufgesetzte Deckel 50 abgenommen werden muß, welcher nach Befüllen der Kammer 44 auf das Trommelmagazin 45 aufgesetzt werden kann und so sowohl einen Funktionsschutz wie auch eine hygienische Abdeckung der Kammern 44 darstellt.

## Patentansprüche

1. Vorrichtung zur diskontinuierlichen Zubereitung von Teigwaren, wie Spaghetti od. dgl., mit einer Portioniervorrichtung zur Aufnahme der Rohteigwaren, einer Kochkammer (1) und einer Entwässerungskammer (2), wobei der Einlaß (1E, 2E) und Auslaß (1A, 2A) von Kochkammer (1) und Entwässerungskammer (2) jeweils durch als Schließklappen (3, 4, 17) ausgebildete Ventile verschließbar sind, wobei zwischen Kochkammer (1) und Entwässerungskammer (2) eine einzige um eine Drehachse (38) schwenkbare Schließklappe (17) vorgesehen ist, und wobei die Schließklappen (3, 4) im Einlaßbereich der Kochkammer (1) und Auslaßbereich der Entwässerungskammer (2) quer zur Einlaß- bzw. Auslaßrichtung verfahrbar sind,
**dadurch gekennzeichnet**, daß die linear bewegbaren Schließklappen (3, 4) in seitlichen Führungsschienen (31) geführt werden, die jeweils eine Ausnehmung (32) aufweisen, deren Enden je eine flache Abwinkelung aufweisen und daß zum Verschließen der Kammern (1, 2) die Schließklappen (3, 4) im Einlaßbereich (1E) der Kochkammer (1) und Auslaßbereich (2A) der Entwässerungskammer (2) in einem von den beiden Richtungen der Ausnehmung (32) gebildeten flachen Winkel (α) auf die entsprechenden Öffnungen der jeweiligen Kammern (1, 2) gepreßt werden.

2. Vorrichtung nach Anspruch 1,
**dadurch gekennzeichnet,** daß der Winkel (α) zum Verschließen der Kammern (1, 2) im Bereich zwischen 0° und 55° liegt.

3. Vorrichtung nach Anspruch 1 oder 2,
**dadurch gekennzeichnet,** daß der Winkel (α) zum Verschließen der Kammern (1, 2) im Bereich zwischen 20° und 40° liegt.

4. Vorrichtung nach einem der Ansprüche 1 bis 3,
**dadurch gekennzeichnet,** daß die Oberfläche der Schließklappen (3, 4, 17) und/oder der Öffnungsbereiche der Kammern (1, 2) und/oder der Führungsschienen (31) aus gehärtetem Material besteht.

5. Vorrichtung nach einem der Ansprüche 1 bis 4,
**dadurch gekennzeichnet,** daß die mit den Teigwaren in Kontakt tretenden Teile der Vorrichtung oberflächenvergütet und/oder oberflächenbeschichtet sind.

6. Vorrichtung nach einem der Ansprüche 1 bis 5,
**dadurch gekennzeichnet,** daß die Ansteuerung der zwischen Kochkammer (1) und Entwässerungskammer (2) angeordneten Schließklappe (17) außerhalb der Entwässerungskammer (2) erfolgt und daß diese Schließklappe (17) über wenigstens eine Verlängerung der Drehachse (38) durch das Gehäuse der Entwässerungskammer (2) angesteuert wird.

7. Vorrichtung nach Anspruch 6,
**dadurch gekennzeichnet,** daß die Drehachse (38) der Schließklappe (17) über einen Hebel (39, 39' 39'') angesteuert wird, dessen Ende mit einem linearen Antrieb derart verbunden ist, daß der Antrieb kurz vor dem Schließen einen großen Weg zurücklegt und die Schließklappe (17) dabei nur eine sehr kleine Schwenkbewegung macht.

8. Vorrichtung nach einem der Ansprüche 1 bis 7,
**dadurch gekennzeichnet,** daß zur besseren Abdichtung die Schließklappen (3, 4, 17) und/oder die Öffnungsbereiche der Kammern (1, 2) mit Dichtungselementen versehen sind.

9. Vorrichtung nach Anspruch 8,
**dadurch gekennzeichnet**, daß jeder Öffnungsbereich der Kammern von einem entsprechend der Öffnungskontur verlaufenden Dichtungselement umgeben ist.

10. Vorrichtung nach Anspruch 9,
**dadurch gekennzeichnet,** daß die Öffnungen einen runden Querschnitt aufweisen und daß als Dichtungselemente O-Ringe vorgesehen sind.

11. Vorrichtung nach einem der Ansprüche 1 bis 10,
**dadurch gekennzeichnet,** daß die Portioniervorrichtung eine Mehrzahl hintereinander angeordneter senkrechter Kammern (44) aufweist, die über die Einlaßöffnung (1E) der Kochkammer (1) bewegbar sind.

12. Vorrichtung nach Anspruch 11,
**dadurch gekennzeichnet,** daß jede Kammer (44) zur Aufnahme einer portionierten Menge an Teigwaren vorgesehen ist.

13. Vorrichtung nach Anspruch 11 oder 12,
**dadurch gekennzeichnet,** daß als Portioniervorrichtung ein schrittweise antreibbares Trommelmagazin (45) vorgesehen ist, in dem die Kammern (44) kreisförmig hintereinander angeordnet sind.

14. Vorrichtung nach einem der Ansprüche 11 bis 13,
**dadurch gekennzeichnet,** daß die Kammern (44) aus Hohlzylindern bestehen.

15. Vorrichtung nach einem der Ansprüche 11 bis 13,
**dadurch gekennzeichnet,** daß die Kammern in einem von zwei konzentrischen Hohlzylindern gebildeten Ringspaltraum angeordnet sind, wobei zur Abtrennung der einzelnen Kammern eine der Anzahl der Kammern entsprechende Anzahl von zwischen den Hohlzylindern angeordneten vertikalen Stegen vorhanden ist.

16. Vorrichtung nach einem der Ansprüche 11 bis 15,
**dadurch gekennzeichnet,** daß die Kammern (44) unten offen sind und in engem Abstand zu einer Gleitfläche (46) bewegbar sind.

17. Vorrichtung nach einem der Ansprüche 11 bis 16,
**dadurch gekennzeichnet,** daß die vertikalen Kammern (44) oben offen sind und mit einem einzigen gemeinsamen Deckel (50) verschließbar sind.

## Claims

1. A device for discontinuous preparation of dough products such as spaghetti, etc. with a portioning device to receive the dough products, a boiling chamber (1) and a dewatering chamber (2), whereby the inlets (1E, 2E) and outlets (1A, 2A) from the boiling chamber (1) and dewatering chamber (2) can be closed by valves designed as shut-off valves (3, 4, 17), whereby there is a single shut-off valve (17) that pivots on a rotational axis (38) between the boiling chamber (1) and dewatering chamber (2), and whereby the shut-off valves (3, 4) can be moved perpendicular to the inlet and outlet direction in the inlet area of the boiling chamber (1) and outlet area of the dewatering chamber (2), characterized in that the linearly moveable shut-off valves (2, 4) are guided in lateral guide rails (31) that have a recess (32) with ends which angle off flat; and that to close the chambers, the shut-off valves (3, 4) in the inlet (1E) of the boiling chamber (1) and outlet (2A) of the dewatering chamber (2) are pressed into a flat angle α formed by the two directions of the recess (32) toward the corresponding openings of the respective chambers (1, 2).

2. A device according to claim 1, characterized in that the angle (α) to close the chambers (1, 2) is 0-55°.

3. A device according to claims 1 or 2, characterized in that the angle (α) to close the chambers (1, 2) is 20-40°.

4. A device according to one of claims 1 to 3, characterized in that the surface of the shut-off valves (3, 4, 17) and/or the opening of the chambers (1, 2) and/or the guide rails (31) are made of a hardened material.

5. A device according to one of claims 1 to 4, characterized in that the surfaces of the device parts contacting the dough products are heat-treated and/or coated.

6. A device according to one of claims 1 to 5, characterized in that the shut-off valve (17) between the boiling chamber (1) and the dewatering chamber (2) is controlled outside the dewatering chamber (2), and the shut-off valve (17) is controlled by at least one extension of the rotational axis (38) through the housing of the dewatering chamber (2).

7. A device according to claim 6, characterized in that the rotational axis (38) of the shut-off valve (17) is controlled by a lever (39, 39', 39'') whose end is connected to a linear drive in such a manner that the drive travels a long path shortly before closing, and the shut-off valve (17) only executes a small pivoting motion.

8. A device according to one of claims 1 to 7, characterized in that the shut-off valves (3, 4, 17) and/or the opening of the chambers (1,2) are provided with seals to provide better sealing.

9. A device according to claim 8, characterized in that each opening of the chambers is surrounded by a seal corresponding to the opening contour.

10. A device according to claim 9, characterized in that the openings have a round cross-section, and O-rings are provided as the seals.

11. A device according to one of claims 1 to 10, characterized in that the portioning device has numerous sequential chambers (44) that can be moved across the inlet opening (1E) of the boiling chamber (1).

12. A device according to claim 11, characterized in that each chamber (44) is provided to receive a portion of a dough product.

13. A device according to claims 11 or 12, characterized in that a drum magazine (45) driven in steps is provided as a portioning device which holds the chambers (44) sequentially in a circle.

14. Device according to one of claims 11 to 13, characterized in that the chambers (44) consist of hollow cylinders.

15. Device according to one of claims 11 to 13, characterized in that the chambers are in an annular gap formed by one of two concentric hollow cylinders, where a number of vertical bars that correspond to the numerous chambers are between the hollow cylinders to separate the individual chambers.

16. Device according to one of claims 11 to 15, characterized in that the chambers (44) are open at the bottom and can be moved at a close distance to a gliding surface (46).

17. Device according to one of claims 11 to 16, characterized in that the vertical chambers (44) are open at the top and can be closed with a single common lid (50).

## Revendications

1. Installation servant à la préparation discontinue de pâtes alimentaires telles que spaghettis ou l'équivalent, avec un dispositif de division en portions accueillant les pâtes alimentaires crues, une chambre de cuisson (1) et une chambre de déshydratation (2), l'entrée (1E, 2E) et la sortie (1A, 2A) de la chambre de cuisson (1) et de la chambre de déshydratation (2) pouvant être respectivement obturées par des vannes réalisées sous forme de clapets de fermeture (3, 4, 17), un seul clapet de fermeture (17) pivotant autour d'un pivot (38) étant prévu entre la chambre de cuisson (1) et la chambre de déshydratation (2), et les clapets de fermeture (3, 4, 17) pouvant être déplacés dans la zone d'entrée de la chambre de cuisson (1) et dans la zone de sortie de la chambre de déshydratation (2) transversalement à la direction d'entrée et de sortie, caractérisée en ce que les clapets de fermeture (3, 4) mobiles linéairement sont guidés dans des glissières latérales (31) lesquelles présentent, respectivement, un évidement (32) dont les extrémités présentent chacune une inclinaison plate, et en ce que pour refermer les chambres (1, 2), les clapets de fermeture (3, 4) sont pressés sur les ouvertures correspondantes des chambres respectives (1, 2), dans la zone d'entrée (1E) de la chambre de cuisson (1) et dans la zone de sortie (2A) de la chambre de déshydratation (2), selon un angle plat (α) formé par les deux directions de l'évidement (32).

2. Installation selon la revendication 1, caractérisée en ce que l'angle (α) de fermeture des chambres (1, 2) se situe dans la plage comprise entre 0° et 55°.

3. Installation selon la revendication 1 ou 2, caractérisée en ce que l'angle (α) de fermeture des chambres (1, 2) se situe dans la plage comprise entre 20° et 40°.

4. Installation selon l'une des revendications 1 à 3, caractérisée en ce que la surface des clapets de fermeture (3, 4, 17) et/ou des zones d'ouverture des chambres (1, 2) et/ou des glissières (31) est fabriquée en matériau traité par trempe.

5. Installation selon l'une des revendications 1 à 4, caractérisée en ce que les parties de l'installation qui entrent en contact avec les pâtes alimentaires sont soumises à un traitement de trempe et de revenu superficiel et/ou d'enduction superficielle.

6. Installation selon l'une des revendications 1 à 5, caractérisée en ce que la commande du clapet de fermeture (17) monté entre la chambre de cuisson (1) et la chambre de déshydratation (2) se fait à l'extérieur de la chambre de déshydratation (2) et en ce que ce clapet de fermeture (17) est mis en mouvement par l'intermédiaire d'au moins un prolongement du pivot (38) au travers de l'enceinte de la chambre de déshydratation (2).

7. Installation selon la revendication 6, caractérisée en ce que le pivot (38) du clapet de fermeture (17) est commandé par un levier (39, 39', 39'') dont l'extrémité est reliée à une commande d'entraînement linéaire de telle façon que peu avant la fermeture, la commande d'entraînement exécute une course longue et qu'ainsi le clapet de fermeture (17) n'exécute qu'un pivotement très limité.

8. Installation selon l'une des revendications 1 à 7, caractérisée en ce que pour assurer un meilleur calfeutrement, les clapets de fermeture (3, 4, 17) et/ou les zones d'ouverture des chambres (1, 2) sont pourvus d'éléments d'étanchéité.

9. Installation selon la revendication 8, caractérisée en ce que chaque zone d'ouverture des chambres est entourée par un élément d'étanchéité qui épouse le contour de l'ouverture de la chambre.

10. Installation selon la revendication 9, caractérisée en ce que les ouvertures présentent une section transversale ronde et en ce qu'on prévoit des joints toriques comme éléments d'étanchéité.

11. Installation selon l'une des revendications 1 à 10, caractérisée en ce que le dispositif de division en portions présente une multiplicité de chambres verticales (44) mobiles au-dessus de l'ouverture d'entrée (1E) de la chambre de cuisson (1).

12. Installation selon la revendication 11, caractérisée en ce que chacune des chambres (44) est prévue pour recevoir une quantité de pâtes alimentaires divisée en portions.

13. Installation selon la revendication 11 ou 12, caractérisée en ce qu'on prévoit, comme dispositif de division en portions, un magasin à tambour (45) qui peut être entraîné pas à pas et dans lequel les chambres (44) sont groupées en cercle les unes à la suite des autres.

14. Installation selon l'une des revendications 11 à 13, caractérisée en ce que les chambres (44) sont constituées de cylindres creux.

15. Installation selon l'une des revendications 11 à 13, caractérisée en ce que les chambres sont disposées dans un espace interstitiel annulaire délimité par deux cylindres creux concentriques, un nombre d'entretoises verticales interposées entre les cylindres creux correspondant au nombre des chambres étant prévu pour séparer les chambres individuelles.

16. Installation selon l'une des revendications 11 à 15, caractérisée en ce que les chambres (44) sont ouvertes en bas et peuvent être déplacées avec un petit écartement par rapport à une surface de glissement (46).

17. Installation selon l'une des revendications 11 à 16, caractérisée en ce que les chambres verticales (44) sont ouvertes en haut et peuvent être fermées avec un seul couvercle (50) commun.
